# EUROPÄISCHE PATENTSCHRIFT

(11) **EP 0 724 368 B1**
(45) Veröffentlichungstag und Bekanntmachung des Hinweises auf die Patenterteilung: **05.03.2003**
(21) Anmeldenummer: 95119500.7
(22) Anmeldetag: 11.12.1995
(51) Int. Cl.: H04Q 3/00, H04M 3/42, H04Q 7/20

(54) **Verfahren und Anordung zum Benutzen unterschiedlicher Kommunikationsnetze durch einen Teilnehmer**
Method and arrangement for using different communications networks by a subscriber
Procédé et dispositif pour l'utilisation de réseaux différents de communications par un abonné

(30) Priorität: 29.12.1994 DE 4447147
(43) Veröffentlichungstag der Anmeldung: 31.07.1996
(73) Patentinhaber: SIEMENS AKTIENGESELLSCHAFT, 80333 München (DE)
(72) Erfinder: Lanig, Eva-Maria, Dipl.-Phys., D-81541 München (DE)

(56) Entgegenhaltungen:
- US-A- 5 142 654
- HIRSCHMAN C B: "SERVICE MOBILITY/TRANSPARENCY FOR PERSONAL COMMUNICATIONS" INTERNATIONAL CONFERENCE ON UNIVERSAL PERSONAL COMMUNICATIONS, 29. September 1992 (1992-09-29), Seiten 12.05.01-12.05.05, XP000672055
- SODERBERG L: "EVOLVING AN INTELLIGENT ARCHITECTURE FOR PERSONAL TELECOMMUNICATION" ERICSSON REVIEW, Bd. 70, Nr. 4, 1. Januar 1993 (1993-01-01), Seiten 156-171, XP000415352 ISSN: 0014-0171

## Beschreibung

Die Erfindung bezieht sich auf ein Verfahren zum Benutzen unterschiedlicher Kommunikationsnetze durch einen Teilnehmer gemäß dem Oberbegriff des Patentanspruchs 1. Weiterhin bezieht sich die Erfindung auf eine Anordnung zur Durchführung des Verfahrens.

Bei den allgemein bekannten ortsfesten Kommunikationsnetzen PSTN(Public Switched Telephone Network)/ISDN(Integrated Services Digital Network) ist ein Teilnehmer, ausschließlich durch eine individuelle, deterministische Rufnummer, die seiner ortsfesten Endeinrichtung zugeordnet ist, identifiziert. Folglich kann der Teilnehmer nur zu den Zeiten, zu denen er sich am Ort seiner ortsfesten Endeinrichtung aufhält, mit seiner deterministischen Rufnummer persönlich erreicht werden. Hiervon unterscheiden sich die in Betrieb befindlichen modernen Mobilfunknetze PLMN (Public Land Mobile Network), wie das deutsche C-Netz und das europäische GSM (Global System for Mobile Communication), dadurch, daß deren Teilnehmer mit ihrer mobilen Endeinrichtung, innerhalb des gesamten Servicebereichs, unabhängig vom Aufenthaltsort, durch eine Standort-Aktualisierungsfunktion (Roaming) erreichbar sind. Beide Systeme besitzen Endgeräte ohne feste Rufnummernzuordnung und verwenden Datenträger zur Identifizierung der Teilnehmer.

Die sogenannten Intelligenten Netzen (IN), die durch einen Ausbau der konventionellen ortsfesten Netze PSTN/ISDN mittels Zusatzeinrichtungen an den bestehenden Vermittlungsstellen realisiert werden, bieten, zusätzlich zu den bereits bestehenden Diensten, zwei neue Typen von weltweiten Diensten an, nämlich die universale persönliche Telekommunikation UPT (Universal Personal Telecommunication), die durch spezielle ortsfeste Endeinrichtungen, ergänzend zu den ortsfesten Zusatzeinrichtungen der Vermittlungsstellen, realisiert werden soll, und die universale mobile Telekommunikation UMT, die mittels einer an die weltweiten orstfesten Kommunikationsnetze angeschlossenen Funkinfrastruktur realisiert werden soll. Diese Infrastruktur ist das universale mobile Telecommunikationssystem UMTS (Universal Mobile Telecommunication System), das auch als FPLMTS (Future Public Mobile Land Telecommunication System ) bezeichnet wird.

Beide Dienste nutzen ausschließlich nur noch Endgeräte, denen eine teilnehmerspezifische Rufnummer zugeordnet werden kannt. Jede UPT- und UMTS/FPLMTS-Endeinrichtung ist aber mit einer Lesevorrichtung für einen Datenträger, beispielsweise einer Chipkarte, ausgerüstet, die jeder Teilnehmer von dem zuständigen Dienste-Anbieter erhält. Dieser Datenträger enthält die persönlichen Daten des Teilnehmers, wie beispielsweise Teilnehmeridentifizierung, Authentifizierung und Serviceberechtigungen, die Teilnehmerprofil genannt werden.

Alle am Intelligenten Netz beteiligten Vermittlungsstellen werden entsprechend der IN-Architektur mit zusätzlichen Datenbanken ausgerüstet, die sowohl eine Dienste-Steuerungsfunktion SCF (Service Control Function), wie auch eine Dienste-Datenfunktion SDF (Service Data Function) besitzen. Darüber hinaus sind die SDF-Einrichtungen in zwei Bereiche untergliedert. Im ersten, als Heimat-SDF (Home-SDF) bezeichneten Bereich werden die Teilnehmerprofile aller im Vermittlungsbereich beheimateten Teilnehmer registriert, während im zweiten, als Besucher-SDF (Visitor-SDF) bezeichneten Bereich die Teilnehmerprofile aller Gastteilnehmer registriert werden. Die Teilnehmer haben damit unabhängig vom Aufenthaltsort die Möglichkeit, ihre individuellen Daten in die verfügbaren Endeinrichtung einzulesen, worauf sowohl für die UPT-Teilnehmer als auch für die UMTS/FPLMTS-Teilnehmer, der jeweilige Aufenthaltsort in den beteiligten IN-Datenbänken gespeichert oder, durch Datenaustausch zwischen den entsprechenden IN-Vermittlungseinrichtungen, aktualisiert wird. Mit dieser Information sind die Intelligenten Netze in der Lage, die Leitweglenkung an den jeweiligen Aufenthaltsort durchzuführen. Somit ist jeder UPT- und UMTS/FPLMTS-Teilnehmer weltweit an seinem jeweiligen Aufenthaltsort erreichbar (Global Roaming). Umgekehrt ermöglichen es die Intelligenten Netze auch, weltweite Verbindungen von jeder UPT- bzw. UMTS/FPLMTS-End-einrichtung aus, auf eigene Rechnung und bargeldlos, aufzubauen.

Die weltweite Teilnahme an den Dienstleistungen der ortsfesten Intelligenten Netze ist für deren Teilnehmer somit lediglich von der Verfügbarkeit einer entsprechenden Endeinrichtung am jeweiligen Aufenthaltsort abhängig. Dabei können die Endeinrichtungen die Eigenschaft haben, auch mehr als einen Datenträger für ankommende Verbindungen zu speichern.

Das UMTS/FPLMTS wird als Funkinfrastruktur mit weltweiter Erreichbarkeit, dank der zwischenzeitlich erfolgten Subminiaturisierung der elektronischen Einrichtungen, schwerpunktmäßig für handliche Mobilstationen, sogenannte Handhelds, konzipiert. Damit können die Teilnehmer dieses Dienstes ihre Endeinrichtungen dauernd mit sich führen und werden weltweit per Funk von der jeweils nächsten ortsfesten Basisstation bedient. Die UMTS/FPLMTS-Infrastruktur, die an die Vermittlungsstellen des Intelligenten Netzes angeschlossen ist, benutzt aber zur Herstellung überregionaler Verbindungen immer die ortsfesten Netze, die in die IN-Struktur eingebunden sind, wie das ISDN/PSTN bzw. ein ATM(Asynchronous Transfer Mode)-fähiges Breitband-ISDN. Die UMTS/FPLMTS-Infrastruktur besitzt keine eigenen Vermittlungseinrichtungen zur gegenseitigen Überleitung des Verkehrs zwischen Festnetz und Funkinfrastruktur, sondern die Funkvermittlungsfunktionen für das UMTS/FPLMTS sind gleichermaßen wie die UPT-Vermittlungsfunktionen in die IN-Komponenten eingebettet. Damit werden über die IN-Komponenten gleichermaßen ortsfeste und mobile Endgeräte bzw. Teilnehmer vermittelt und es können an jede IN-Vermittlungseinrichtung Basisstationen des UMTS/FPLMTS direkt angeschlossen werden.

Zur Versorgung extrem dünn besiedelter Landgebiete wie auch zur Versorgung der Meere ist es vorgesehen, die landgebundene Mobilfunk-Infrastruktur mit einem diensteintegrierten Satellitensystem als Teil der UMTS/FPLMTS-Infrastruktur zu ergänzen.

Während die gemeinsame Eigenschaft der Dienste in den Intelligenten Netzen die Rufnummer-Neutralität ihrer Endeinrichtungen ist, die es den UPT-Teilnehmern wie auch den UMTS-Teilnehmern gestattet den Dienst, weltweit und unabhängig vom Aufenthaltsort in Anspruch zu nehmen, besteht ein Unterschied zwischen den Diensten darin, daß der UPT-Teilnehmer Endeinrichtungen verschiedenster ortsfester, sowie mobiler Netze, durch das Eingeben seiner persönlichen Daten vom Datenträger nutzen kann, während im UMTS/FPLMTS der Teilnehmer das Endgerät mit sich führt, und damit an jedem Ort erreichbar ist oder ein Gespräch führen kann. Nur im Fall der gewünschten Nichterreichbarkeit kann er seinen persönlichen Datenträger aus dem Endgerät entfernen oder das Endgerät abschalten.

Ein weiterer sehr wesentlichen Unterschied zwischen den beiden Diensten besteht darin, daß für den Mobilfunk immer nur ein sehr geringer Teil des gesamten Frequenzbandes zur Verfügung steht, für das, um einen hinreichend funkstörungsfreien Betrieb zu gewährleisten, die räumlichen Wiederbenutzungsabstände eingehalten werden müssen. Um dabei mit dem knappen Frequenzband eine hohe Verkehrsdichte zu erzielen, stehen dem einzelnen UMTS/FPLMTS-Teilnehmer typischerweise jeweils nur wenige kHz Übertragungsbandbreite zur Verfügung. Somit können nur relativ niedrige Datenmengen pro Zeiteinheit auf dem Funkweg übertragen werden. Bei den ortsfesten Intelligenten Netzen, wie sie den UPT-Teilnehmern zur Verfügung stehen, können hingegen sehr viel höhere Datenmengen pro Teilnehmer übertragen werden, weil innerhalb jeder Leitung im Prinzip das gesamte Frequenzband zur Verfügung steht. Wenn den ortsfesten Intelligenten Netzen die ATM-Einrichtungen des Breitband-ISDN zur Verfügung stehen bestehen für den einzelnen UPT-Teilnehmer kaum Einschränkungen in den übertragbaren Datenmengen.

Damit ergibt sich zwangsläufig, daß die Dienstangebote sowie die persönliche Erreichbarkeit in den beiden Typen von Diensten unterschiedlich sein müssen. Naturgemäß müssen auch die Signalisierungsdialoge, mit denen die jeweiligen Endgeräte erreicht werden, in den Protkollschichten der beider Dienstetypen unterschiedlich sein, so daß deren direkte Signalisierungskompatibilität nicht gegeben ist. Darüber hinaus ist zu erwarten, daß es innerhalb der Intelligenten Netze der verschiedenen Regionen auch geringe strukturbedingte Inkompatibilitäten und unterschiedliche Dienstangebote geben wird.

Insbesondere aus der uneingeschränkten Erreichbarkeit ergibt sich für die UPT-Teilnehmer die Forderung am UMTS/FPLMTS-Dienst teilhaben zu können.

Aus Hirschmann C. B. :"Service Mobility/Transparency for Personal Communications", Internationals Conference on Universal Personal Communications, IEEE 1992 sind Ansätze beschrieben, wie ein Benutzer beim Wechsel von einem Kommunikationsnetz in ein anderes ein Dienste-Profil mitnehmen kann, welches es ihm ermöglicht, diese Dienste in dem Fremden Netz zu benutzen. In einem von 3 Szenarios wird für GSM Netze die Idee beschrieben, Benutzer-Daten an ein besuchtes Netz zu senden. Es ist jedoch noch nicht klar, welche Daten zu welchem Zeitpunkt übertragen werden sollen.

Der Erfindung liegt die Aufgabe zugrunde, ein Verfahren und eine Anordnung anzugeben, die es den Teilnehmern eines Dienstes der Intelligenten Netzes gestatten, auch den anderen Dienst zu nutzen.

Erfindungsgemäß wird diese Aufgabe bei dem Verfahren der eingangs genannten Art durch die im Kennzeichen des Patentanspruchs 1 angegebenen Merkmale gelöst. Eine erfindungsgemäße Anordnung ist im Patentanspruch 11 angegeben. Weiterbildungen der Erfindung ergeben sich aus den Unteransprüchen.

Das Verfahren und die Anordnung gemäß der Erfindung haben den Vorteil, daß die Übernahme der Teilnehmer eines Dienstes, beispielsweise des UPT-Dienstes in ein anderes Netz, beispielsweise ein dem UMTS/FPLMTS-Dienst zugeordnetes Netz, ohne weiteres möglich ist.

Das Verfahren und die Anordnung gemäß der Erfindung werden im folgenden anhand eines Ausführungsbeispiels einer Anordnung zur Durchführung des Verfahrens näher erläutert.

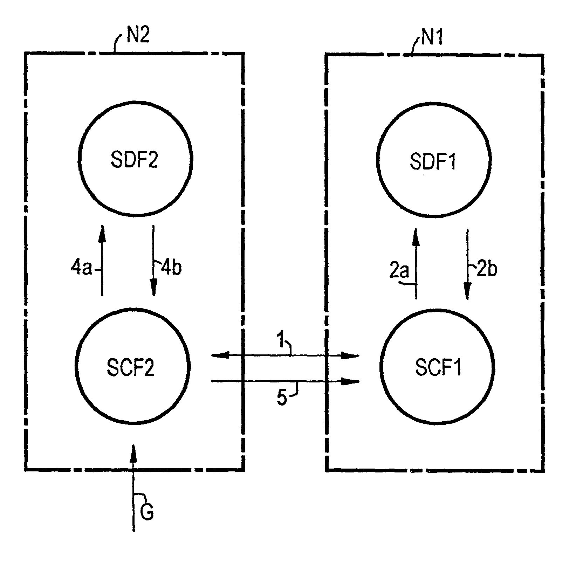

Die Figur zeigt ein Ausführungsbeispiel einer Anordnung zur Durchführung des Verfahrens.

Bei der in der Figur dargestellten Anordnung wird beispielhaft angenommen, dass zwei Intelligente Netze N1 und N2 vorgesehen sind, wobei das Netz N1 dem UPT-Dienst und das Netz N2 dem UMTS/FPLMTS zugeordnet ist. Ferner wird angenommen, daß ein Teilnehmer G, der ein UPT-Teilnehmer des Netzes N1 ist, die UMTS/FPLMTS-Dienste des fremden Netzes N2, das beispielsweise das Netz eines anderen Netzbetreibers oder das Netz eines anderen Landes ist, nutzen will. Der Teilnehmer wird im folgenden als Gastteilnehmer G bezeichnet.

Beim ersten Kontakt des Gastteilnehmers G mit dem fremden Netz N2 stellt dieses eine Signalisierungsverbindung (1) zu dessen Heimatnetz N1 her. Hierzu ist es notwendig, daß zwischen den beteiligten Netzbetreibern entsprechende Verbindungen bestehen.

Die Übertrittprozedur in den anderen Dienst geht dabei folgendermaßen vor sich: Nachdem sich der Gastteilnehmer G und auch das besuchten Netz N2 bei dem Heimatnetz N1 authentifiziert haben, wird nach einer entspechenden Anfrage (2a) das Profil des Gastteilnehmers G, oder der relevante Teil daraus, aus der Datenbank SDF1 des Heimatnetzes N1 kopiert (2b) und über die Service Control Funktionen SCF1 und SCF2 der beteiligten Netze N1 und N2 an die entsprechende SDF2 des besuchten Netzes N2 übertragen. Alternativ zu dieser Übertragung kann auch eine direkte Datenabfrage von der betroffenen Steuerfunktion SCF2 des Netzes N2 zur entsprechenden Datenbank SDF1 des Netzes N1 vorgenommen werden.

In der Datenbank SDF2 des Netzes N2 wird nun ein neuer Teilnehmerdatensatz für den Gastteilnehmer G erzeugt und eingerichtet (4a, 4b), dem eine Teilnehmernummer des Netzes N2 sowie eine Teilnehmeridentität zugewiesen wird. Nachfolgend wird der Gastteilnehmer G für die Dauer seines Besuchs wie ein Teilnehmer des Netzes N2 behandelt. Ist der gewählte Dienst des besuchten Netzes N2 wie im gezeigten Beispiel der Mobilfunkdienst UMTS/FPLMTS, so kann sich der UPT-Gastteilnehmer G wie ein Mobilteilnehmer im Operationsgebiet uneingeschränkt bewegen, seine automatische Standortaktualisierung (Roaming) wird in der selben Weise vorgenommen wie bei jedem anderen Mobilfunk-Teilnehmer des Netzes N2. Hierbei übernimmt die Datenbank SDF2 des Funkvermittlungsbereichs, in den der Gastteilnehmer G eingetreten ist, bis zu seinem Austritt die Funktion einer Heimat-SDF. Verläßt der Gastteilnehmer G dabei den Funkvermittlungsbereichs in den er eingetreten ist durch Standortveränderung (Roaming), so werden im Besucherbereich der Datenbank SDF2 des jeweils besuchten Funkvermittlungsbereichs Kopien des Gastteilnehmersatzes erstellt, die die uneingeschränkte Erreichbarkeit des Gastteilnehmers G im UMTS/FPLMTS-Dienst gewährleisten.

Beendet der Gastteilnehmer G seinen Aufenthalt im besuchten Netz N2 durch einen Ausbuchungsvorgang, so werden sämtliche Datenbankeinträge im Netz N2 gelöscht und die temporär zugewiesene Teilnehmernummer im Netz N2 wieder freigegeben.

In den Intelligenten Netzen sind hierzu folgende Voraussetzungen erfüllt:
1. Zwischen den Einheiten Service Control Function SCF1 und SCF2 beider Netze N1 und N2 ist zum Identifizieren der Teilnehmer eine netzübergreifende Datenkommunikation, sowie die Übertragung von Teilnehmerdaten möglich.
2. Innerhalb beider Netze N1 und N2 werden zwischen der Einheit Service Control Function SCF1, SCF2 und der Einheit Service Data Function SDF1, SDF2, bei der die Teilnehmerdaten gespeichert werden, diese Teilnehmerdaten ausgetauscht und bestätigt. Sowohl in der Einheit SDF2 wie auch in der Einheit SCF2 wird jeweils ein Teil der Speicherkapazität und der zu verwaltenden Teilnehmernummern für temporäre Teilnehmer, nämlich die Gastteilnehmer G, reserviert.
3. Die Einheit SDF1 muß in Verbindung mit der Einheit SCF2 die eintretenden Gastteilnehmer G aufgrund eines Signalisierungsbefehls als Diensteteilnehmer einrichten.
4. Zwischen den beteiligten Einrichtungen der Intelligenten Netzen sind Authentifizierungsverfahren verfügbar, die in der Lage sind, sowohl die Identität des Gastteilnehmers G, wie auch des besuchten Netzes N2 gegenüber dem Heimatnetz N1, und umgekehrt, zu überprüfen.
5. Das Netz N2 erkennt aus der Identität des Gastteilnehmers G, daß es sich um einen Teilnehmer des Netzes N1 handelt und ist in der Lage, zum Netz N1 eine Signalisierungsverbindung aufzubauen.

In den Intelligenten Netzen ist es somit für die Teilnehmer Gdes UPT- Dienstes möglich, sich auf Teilnehmerstationen des UMTS/FPLMTS-Dienstes zu registrieren, ohne für dieses Netz N2eine separate Berechtigung zu besitzen. Dazu müssen für die Teilnehmerstation bzw. für seinen temporären Benutzer sämtliche funkspezifischen lokalen Managementprozeduren, wie automatische Aufenthalts-Aktualisierung (Roaming) und Einbuchen und Ausbuchen (Attach/Detach), durchgeführt werden.

Um dem UPT-Teilnehmer G im UMTS/FPLMTS-Netz N2 ein Gespräch zustellen zu können, muß der genaue Aufenthaltsort des Gastteilnehmers G durch eine Datenbankabfrage und einen Ruf (Paging) entsprechend den UMTS/FPLMTS-Prozeduren durchgeführt werden. Will der UPT-Teilnehmer G über das UMTS/FPLMTS ein Gespräch führen, so muß seine Berechtigung dazu in seinem Teilnehmerprofil nachgeprüft werden.

Damit die Registrierung von UPT-Teilnehmern G, die Mobilfunkgeräte benutzen, in gleicher Weise wie die Registrierung an ortsfesten UPT-Teilnehmerstationen durchgeführt werden kann, und um das dafür erforderliche Signalisierungsaufkommen zwischen den jeweiligen IN-Netzeinrichtungen zu minimieren, werden die UPT-Teilnehmer G somit temporär als UMTS/FPLMTS-Teilnehmer eingerichtet. Im Teilnehmerprofil des UPT-Teilnehmers G wird in dessen Heimat-SDF SDF1 lediglich die zugeteilte UMTS/FPLMTS-Nummer vermerkt (5), die dem UPT-Teilnehmer G temporär zugewiesen wurde. Zwischen den beiden Netzen N1 und N2 werden im Verbindungsfall dann nur die angefallenen Gebühren, aber sonst keine weiteren mobilfunkspezifischen Daten ausgetauscht.

## Patentansprüche

1. Verfahren zum Benutzen von Kommunikationsnetzen (N1, N2) durch einen Teilnehmer (G);
bei dem der Teilnehmer (G) einem ersten Netz (N1) zugeordnet ist und
er die Dienste eines zweiten Netzes (N2) benutzt, mit folgenden Schritten
(a) bei der ersten Kontaktaufnahme des Teilnehmers (G) mit dem zweiten Netz (N2) wird von dem zweiten Netz (N2) eine Verbindung zum ersten Netz (N1) hergestellt, und
(b) dem Teilnehmer (G) zugeordnete Teilnehmerdaten werden vom ersten Netz (N1) zum zweiten Netz (N2) übertragen,
**dadurch gekennzeichnet, dass**
(c) diese Teilnehmerdaten im zweiten Netz (N2) gespeichert werden, und
(d) dem Teilnehmer (G) aufgrund dieser Teilnehmerdaten weitere Daten, insbesondere eine Teilnehmernummer des zweiten Netzes, im zweiten Netz (N2) zugeordnet werden,
(e) mittels denen er im zweiten Netz (N2) wie ein Teilnehmer des zweiten Netzes (N2) behandelt wird.

2. Verfahren nach Anspruch 1,
**dadurch gekennzeichnet, dass**
sich nach der ersten Kontaktaufnahme des Teilnehmers (G) mit dem zweiten Netz (N2) das zweite Netz (N2) gegenüber dem ersten Netz (N1) authentifiziert.

3. Verfahren nach Anspruch 1 oder Anspruch 2,
**dadurch gekennzeichnet, dass**
sich der Teilnehmer (G) nach der ersten Kontaktaufnahme des Teilnehmers (G) mit dem zweiten Netz (N2) gegenüber dem ersten Netz (N1) authentifiziert.

4. Verfahren nach einem der Ansprüche 1 bis 3,
**dadurch gekennzeichnet, dass**
im ersten Netz (N1) die dem Teilnehmer (G) im zweiten Netz (N2) zugeordnete Teilnehmernummer gespeichert wird.

5. Verfahren nach einem der Ansprüche 1 bis 4,
**dadurch gekennzeichnet, dass**
vom zweiten Netz (N2) zum ersten Netz (N1) den Teilnehmer (G) betreffende Gebührendaten übertragen werden.

6. Verfahren nach einem der Ansprüche 1 bis 5,
**dadurch gekennzeichnet, dass**
bei einer Ausbuchung des Teilnehmers (G) aus dem zweiten Netz (N2) alle den Teilnehmer (G) betreffenden Teilnehmerdaten im zweiten Netz (N2) gelöscht werden.

7. Verfahren nach einem der Ansprüche 1 bis 6,
**dadurch gekennzeichnet, dass**
als Netze (N1, N2) unter der Bezeichnung Intelligente Netze (IN) bekannte Netze verwendet werden.

8. Verfahren nach einem der Ansprüche 1 bis 7,
**dadurch gekennzeichnet, dass** als erstes Netz (N1) ein Netz für eine universale persönliche Telekommunikation, als UPT abgekürzt, und dass als zweites Netz (N2) ein Netz für ein universales mobiles Telekommunikationssystem, als UMTS abgekürzt vorgesehen ist.

9. Verfahren nach einem der Ansprüche 1 bis 8, wobei das erste Netz (N1) und das zweite Netz (N2) jeweils Einheiten für eine Dienste-Steuerfunktion (SCF1, SCF2) und eine Dienste-Datenfunktion (SDF1, SDF2) aufweisen,
**dadurch gekennzeichnet, dass**
die Übertragung der Teilnehmerdaten von der Einheit für die Dienste-Steuerfunktion (SCF1) des ersten Netzes (N1) zur Einheit für die Dienste-Steuerfunktion (SCF2) des zweiten Netzes (N2) erfolgt.

10. Verfahren nach einem der Ansprüche 1 bis 8,
**dadurch gekennzeichnet, dass**
die Übertragung der Teilnehmerdaten von der Einheit für die Dienste-Datenfunktion (SDF1) des ersten Netzes (N1) zur Einheit für die Dienste-Steuerfunktion (SCF2) des zweiten Netzes (N2) erfolgt.

11. Anordnung zum Benutzen unterschiedlicher Kommunikationsnetze (N1, N2) durch einen Teilnehmer (G), bei dem der Teilnehmer (G) einem ersten Netz (N1) zugeordnet ist und die Dienste eines zweiten Netzes (N2) benutzt, mit
- Einrichtungen (SCF1, SDF1, SCF2), mittels denen bei der ersten Kontaktaufnahme des Teilnehmers (G) mit dem zweiten Netz (N2) von diesem eine Verbindung zum ersten Netz (N1) herstellbar ist, und mit
- Einrichtungen (SCF1, SDF1, SCF2), über die dem Teilnehmer (G) zugeordnete Teilnehmerdaten vom ersten Netz (N1) zum zweiten Netz (N2) übertragen werden
**dadurch gekennzeichnet, dass**
- mit Einrichtungen (SDF2), in denen die übertragenen Teilnehmerdaten im zweiten Netz gespeichert werden, und
- in denen dem Teilnehmer (G) aufgrund der Teilnehmerdaten weitere Daten im zweiten Netz (N2) zugeordnet werden, insbesondere eine Teilnehmernummer des zweiten Netzes, mittels denen er im zweiten Netz (N2) in entsprechender Weise wie ein Teilnehmer des zweiten Netzes (N2) behandelt wird.

12. Anordnung nach Anspruch 11,
**dadurch gekennzeichnet, dass**
Einrichtungen (SCF1, SCF2) vorgesehen sind, mittels denen nach der ersten Kontaktaufnahme des Teilnehmers (G) mit dem zweiten Netz (N2) dieses gegenüber dem ersten Netz (N1) authentifizierbar ist.

13. Anordnung nach Anspruch 11 oder Anspruch 12,
**dadurch gekennzeichnet, dass**
das zweite Netz (N2) Einrichtungen (SCF2) enthält, mittels denen die Identität des Teilnehmer (G) nach seiner ersten Kontaktaufnahme mit dem zweiten Netz (N2) gegenüber dem ersten Netz (N1) authentifizierbar ist.

14. Anordnung nach einem der Ansprüche 11 bis 13,
**dadurch gekennzeichnet, dass**
das erste Netz (N1) eine Einrichtung (SCF1) aufweist, in der die dem Teilnehmer (G) im zweiten Netz (N2) zugeordnete Teilnehmernummer speicherbar ist.

15. Anordnung nach einem der Ansprüche 11 bis 14,
**dadurch gekennzeichnet, dass**
als Netze (N1, N2) unter der Bezeichnung Intelligente Netze (IN) bekannte Netze vorgesehen sind.

16. Anordnung nach einem der Ansprüche 11 bis 15,
**dadurch gekennzeichnet, dass**
Verbindungen vorgesehen sind, über die vom zweiten Netz (N2) zum ersten Netz (N1) den Teilnehmer (G) betreffende Gebührendaten übertragbar sind.

17. Anordnung nach einem der Ansprüche 11 bis 16,
**dadurch gekennzeichnet, dass**
das erste Netz (N1) ein Netz für eine universale persönliche Telekommunikation, als UPT abgekürzt, ist und dass das zweite Netz (N2) ein Netz für ein universales mobiles Telekommunikationssystem, als UMTS/FPLMTS abgekürzt, ist.

18. Anordnung nach einem der Ansprüche 11 bis 17, wobei das erste Netz (N1) und das zweite Netz (N2) jeweils Einheiten für eine Dienste-Steuerfunktion (SCF1, SCF2) und eine Dienste-Datenfunktion (SDF1, SDF2) aufweisen,
**dadurch gekennzeichnet, dass**
für die Übertragung der Teilnehmerdaten eine Verbindung von der Einheit für die Dienste-Steuerfunktion (SCF1) des ersten Netzes (N2) zur Einheit für die Dienste-Steuerfunktion (SCF2) des zweiten Netzes (N2) vorgesehen ist.

19. Anordnung nach einem der Ansprüche 11 bis 17,
**dadurch gekennzeichnet, dass**
für die Übertragung der Teilnehmerdaten eine Verbindung von der Einheit für die Dienste-Datenfunktion (SDF1) des ersten Netzes (N1) zur Einheit für die Dienste-Steuerfunktion (SCF2) des zweiten Netzes (N2) vorgesehen ist.

## Claims

1. Method for the use of communication networks (N1, N2) by a subscriber (G),
in which the subscriber (G) is associated with a first network (N1), and
he uses the services of a second network (N2), having the following steps:
(a) when the subscriber (G) contacts the second network (N2) for the first time, the second network (N2) sets up a connection to the first network (N1), and
(b) subscriber data associated with the subscriber (G) are transmitted from the first network (N1) to the second network (N2),
**characterized in that**
(c) these subscriber data are stored in the second network (N2), and
(d) these subscriber data are taken as a basis for allocating the subscriber (G) further data, particularly a subscriber number for the second network, in the second network (N2),
(e) said further data being used in the second network (N2) to treat the subscriber as a subscriber associated with the second network (N2).

2. Method according to Claim 1,
**characterized in that**,
when the subscriber (G) has contacted the second network (N2) for the first time, the second network (N2) authenticates itself to the first network (N1).

3. Method according to Claim 1 or Claim 2,
**characterized in that**,
when the subscriber (G) has contacted the second network (N2) for the first time, the subscriber (G) authenticates himself to the first network (N1).

4. Method according to one of Claims 1 to 3,
**characterized in that**
the first network (N1) stores the subscriber number associated with the subscriber (G) in the second network (N2).

5. Method according to one of Claims 1 to 4,
**characterized in that**
charge data relating to the subscriber (G) are transmitted from the second network (N2) to the first network (N1).

6. Method according to one of Claims 1 to 5,
**characterized in that**
all subscriber data relating to the subscriber (G) are erased in the second network (N2) when the subscriber (G) logs out of the second network (N2).

7. Method according to one of Claims 1 to 6,
**characterized in that**
the networks (N1, N2) used are networks known by the name Intelligent Networks (IN).

8. Method according to one of Claims 1 to 7,
**characterized in that** the first network (N1) provided is a network for universal personal telecommunication, abbreviated to UPT, and **in that** the second network (N2) used is a network for a universal mobile telecommunication system, abbreviated to UMTS.

9. Method according to one of Claims 1 to 8, where the first network (N1) and the second network (N2) each have units for a service control function (SCF1, SCF2) and a service data function (SDF1, SDF2),
**characterized in that**
the subscriber data are transmitted from the unit for the service control function (SCF1) in the first network (N1) to the unit for the service control function (SCF2) in the second network (N2).

10. Method according to one of Claims 1 to 8,
**characterized in that**
the subscriber data are transmitted from the unit for the service data function (SDF1) in the first network (N1) to the unit for the service control function (SCF2) in the second network (N2).

11. Arrangement for the use of different communication networks (N1, N2) by a subscriber (G), in which the subscriber (G) is associated with a first network (N1) and uses the services of a second network (N2), having
- devices (SCF1, SDF1, SCF2) which the subscriber (G) can use to set up a connection to the first network (N1) when he contacts the second network (N2) for the first time, and having
- devices (SCF1, SDF1, SCF2) which are used to transmit subscriber data associated with the subscriber (G) from the first network (N1) to the second network (N2),
**characterized in that**
- devices (SDF2) in which the transmitted subscriber data are stored in the second network and
- in which the subscriber data are taken as a basis for allocating the subscriber (G) further data in the second network (N2), particularly a subscriber number for the second network, which further data are used in the second network (N2) to treat him as appropriate for a subscriber associated with the second network (N2), [lacuna].

12. Arrangement according to Claim 11,
**characterized in that**
devices (SCF1, SCF2) are provided which can be used to authenticate the second network (N2) to the first network (N1) when the subscriber (G) has contacted the second network (N2) for the first time.

13. Arrangement according to Claim 11 or Claim 12,
**characterized in that**
the second network (N2) contains devices (SCF2) which can be used to authenticate the identity of the subscriber (G) to the first network (N1) when he has contacted the second network (N2) for the first time.

14. Arrangement according to one of Claims 11 to 13,
**characterized in that**
the first network (N1) has a device (SCF1) which can store the subscriber number associated with the subscriber (G) in the second network (N2).

15. Arrangement according to one of Claims 11 to 14,
**characterized in that**
the networks (N1, N2) provided are networks known by the name Intelligent Networks (IN).

16. Arrangement according to one of Claims 11 to 15,
**characterized in that**
connections are provided which can be used to transmit charge data relating to the subscriber (G) from the second network (N2) to the first network (N1).

17. Arrangement according to one of Claims 11 to 16,
**characterized in that**
the first network (N1) is a network for universal personal telecommunication, abbreviated to UPT, and **in that** the second network (N2) is a network for a universal mobile telecommunication system, abbreviated to UMTS/FPLMTS.

18. Arrangement according to one of Claims 11 to 17, where the first network (N1) and the second network (N2) each have units for a service control function (SCF1, SCF2) and a service data function (SDF1, SDF2),
**characterized in that**,
for transmitting the subscriber data, a connection is provided from the unit for the service control function (SCF1) in the first network (N1) to the unit for the service control function (SCF2) in the second network (N2).

19. Arrangement according to one of Claims 11 to 17,
**characterized in that**,
for transmitting the subscriber data, a connection is provided from the unit for the service data function (SDF1) in the first network (N1) to the unit for the service control function (SCF2) in the second network (N2).

## Revendications

1. Procédé pour l'utilisation de réseaux de communication (N1, N2) par un abonné (G), dans lequel l'abonné (G) est affecté à un premier réseau (N1) et utilise les services d'un second réseau (N2), comprenant les étapes suivantes :
(a) lors de la première prise de contact de l'abonné (G) avec le second réseau (N2), ledit second réseau (N2) établit une liaison vers le premier réseau (N1) et
(b) les données affectées à l'abonné (G) sont transmises du premier réseau (N1) au second réseau (N2),
**caractérisé en ce que**
(c) ces données d'abonné sont enregistrées dans le second réseau (N2) et
(d) suite à ces données d'abonné, d'autres données sont affectées à l'abonné (G) dans le second réseau (N2), en particulier un numéro d'abonné du second réseau,
(e) grâce auxquelles il est traité dans le second réseau (N2) comme un abonné du second réseau (N2).

2. Procédé selon la revendication 1, **caractérisé en ce qu'**après la première prise de contact de l'abonné (G) avec le second réseau (N2), le second réseau (N2) s'authentifie auprès du premier réseau (N1).

3. Procédé selon la revendication 1 ou la revendication 2, **caractérisé en ce qu'**après la première prise de contact de l'abonné (G) avec le second réseau (N2), l'abonné (G) s'authentifie auprès du premier réseau (N1).

4. Procédé selon l'une des revendications 1 à 3, **caractérisé en ce que** le numéro d'abonné affecté à l'abonné (G) dans le second réseau (N2) est enregistré dans le premier réseau (N1).

5. Procédé selon l'une des revendications 1 à 4, **caractérisé en ce que** des données de taxation concernant l'abonné (G) sont transmises du premier réseau (N1) au second réseau (N2) .

6. Procédé selon l'une des revendications 1 à 5, **caractérisé en ce que** dans le cas d'une désinscription de l'abonné (G) du second réseau (N2), toutes les données d'abonné concernant l'abonné (G) sont supprimées dans le second réseau (N2).

7. Procédé selon l'une des revendications 1 à 6, **caractérisé en ce que** l'on utilise comme réseaux (N1, N2) des réseaux connus sous le nom de Réseaux Intelligents (IN).

8. Procédé selon l'une des revendications 1 à 7, **caractérisé en ce qu'**il est prévu comme premier réseau (N1) un réseau pour une télécommunication personnelle universelle, en abrégé UPT, et **en ce qu'**il est prévu comme second réseau (N2) un réseau pour un système de télécommunication mobile universelle, en abrégé UMTS.

9. Procédé selon l'une des revendications 1 à 8, dans lequel le premier réseau (N1) et le second réseau (N2) comprennent chacun des unités pour une fonction de contrôle de services (SCF1, SCF2) et une fonction de données de services (SDF1, SDF2), **caractérisé en ce que** la transmission des données d'abonné s'effectue de l'unité pour la fonction de contrôle de services (SCF1) du premier réseau (N1) vers l'unité pour la fonction de contrôle de services (SCF2) du second réseau (N2).

10. Procédé selon l'une des revendications 1 à 8, **caractérisé en ce que** la transmission des données d'abonné s'effectue de l'unité pour la fonction de données de services (SDF1) du premier réseau (N1) vers l'unité pour la fonction de données de services (SCF2) du second réseau (N2).

11. Dispositif pour l'utilisation de réseaux différents de communication (N1, N2) par un abonné (G), dans lequel l'abonné (G) est affecté à un premier réseau (N1) et utilise les services d'un second réseau (N2), comprenant :
- des unités (SCF1, SDF1, SCF2) grâce auxquelles, lors de la première prise de contact de l'abonné (G) avec le second réseau (N2), ce dernier peut établir une liaison vers le premier réseau (N1), et comprenant
- des unités (SCF1, SDF1, SCF2) par l'intermédiaire desquelles des données d'abonné affectées à l'abonné (G) sont transmises du premier réseau (N1) au second réseau (N2),
**caractérisé en ce que**
- des unités (SDF2) sont prévues, dans lesquelles les données d'abonné transmises sont enregistrées dans le second réseau (N2) et
(d) dans lesquelles, suite auxdites données d'abonné, d'autres données sont affectées à l'abonné (G) dans le second réseau (N2), en particulier un numéro d'abonné dudit second réseau, grâce auxquelles il est traité dans le second réseau (N2), en conséquence, comme un abonné du second réseau (N2).

12. Dispositif selon la revendication 11, **caractérisé en ce que** des unités (SCF1, SCF2) sont prévues grâce auxquelles, après la première prise de contact de l'abonné (G) avec le second réseau (N2), ce dernier est authentifiable auprès du premier réseau (N1).

13. Dispositif selon la revendication 11 ou la revendication 12, **caractérisé en ce que** le second réseau (N2) comprend des unités (SCF2) grâce auxquelles l'identité de l'abonné (G), après sa première prise de contact avec le second réseau (N2), est authentifiable auprès du premier réseau (N1).

14. Dispositif selon l'une des revendications 11 à 13, **caractérisé en ce que** le premier réseau (N1) comprend une unité (SCF1) dans laquelle le numéro d'abonné affecté à l'abonné (G) dans le second réseau (N2) peut être enregistré.

15. Dispositif selon l'une des revendications 11 à 14, **caractérisé en ce qu'**il est prévu comme réseaux (N1, N2) des réseaux connus sous le nom de Réseaux Intelligents (IN).

16. Dispositif selon l'une des revendications 11 à 15, **caractérisé en ce que** des liaisons sont prévues, par l'intermédiaire desquelles des données de taxation concernant l'abonné (G) peuvent être transmises du second réseau (N2) au premier réseau (N1).

17. Dispositif selon l'une des revendications 11 à 16, **caractérisé en ce que** le premier réseau (N1) est un réseau pour une télécommunication personnelle universelle, en abrégé UPT, et **en ce que** le second réseau (N2) est un réseau pour un système de télécommunication mobile universelle, en abrégé UMTS/FPLMTS.

18. Dispositif selon l'une des revendications 11 à 17, dans lequel le premier réseau (N1) et le second réseau (N2) comprennent chacun des unités pour une fonction de contrôle de services (SCF1, SCF2) et une fonction de données de services (SDF1, SDF2), **caractérisé en ce qu'**il est prévu pour la transmission des données d'abonné une liaison allant de l'unité pour la fonction de contrôle de services (SCF1) du premier réseau (N1) à l'unité pour la fonction de contrôle de services (SCF2) du second réseau (N2).

19. Dispositif selon l'une des revendications 11 à 17, **caractérisé en ce qu'**il est prévu pour la transmission des données d'abonné une liaison allant de l'unité pour la fonction de données de services (SDF1) du premier réseau (N1) à l'unité pour la fonction de données de services (SCF2) du second réseau (N2).
